# EUROPEAN PATENT SPECIFICATION

(11) **EP 1 481 584 B1**
(45) Date of publication and mention of the grant of the patent: **26.04.2006**
(21) Application number: 04076492.0
(22) Date of filing: 19.05.2004
(51) Int. Cl.: A01J 25/16

(54) **Submersion rack and submersion apparatus for submerging cheeses and construction kit for assembling such a submersion rack**
Untertauch-Schrank und Untertauch-Vorrichtung für das Untertauchen von Käse, und Bausatz für den Zusammenbau eines solchen Untertauch-Schranks
Casier de submersion et appareil de submersion pour submerger les fromages, et kit de construction pour assembler un tel casier de submersion

(30) Priority: 26.05.2003 NL 1023535
(43) Date of publication of application: 01.12.2004
(73) Proprietor: Betelgeuze B.V., 8912 AV Leeuwarden (NL)
(72) Inventor: Van der Schaaf, Gooitzen, 9247 DM Ureterp (NL)
(74) Representative: Winckels, Johannes Hubertus F.

(56) References cited:
- US-A- 3 910 174
- US-A- 4 815 368
- US-A- 5 195 426

## Description

### FIELD AND BACKGROUND OF THE INVENTION

The invention relates to a submersion rack and to a submersion apparatus for submerging cheeses, and to a construction kit for assembling such a submersion rack.

When manufacturing cheese, first, curd and whey are obtained from milk. After having been substantially separated from the (liquid) whey, the curd is processed, after having been pressed or not having been pressed, into blocks which are submerged in a bath. As a rule, these blocks are indicated as cheeses although, generally, they do not yet have the properties envisaged for consumption.

One of the processes the cheeses are usually submitted to is submersion in a bath of a liquid, generally brine, but sometimes, depending on the type of cheese to be manufactured, also a bath with water which has not been brined. Prior to submersion, the cheeses are placed in a submersion rack, for which, in general, the name brine rack is used. As the density of cheeses is smaller than that of brine, submerged cheeses tend to float. Therefore, the cheeses in the brine rack are not only supported for arranging them in the rack prior to submersion, but the brine rack is also designed for keeping the cheeses, inclining to float, in a submerged condition and, in particular, provisions have been made to prevent the cheeses from escaping and floating upwards during and after submersion.

A submersion rack according to the introductory portion of claim 1 is known from US patent 3 910 174. This submersion rack is composed of a number of compartments with shelves. At both end faces of the compartments panels are present, so that the panels and the shelves are interconnected and held at a distance from each other. On the longitudinal side of the shelves, the compartments are open so that the cheese can be introduced between the shelves and be taken out. Along an outer edge, the shelves each have an upstanding flange preventing the cheeses from floating from the compartment during submersion. The height of the flange is approximately equal to the clearance with which the cheeses fit between the shelves. Therefore, due to the flange, the cheese cannot escape when floating upwards, but the flange does not secure the floating cheese. This means that the height of the cheeses between the two shelves needs to be fairly accurately geared to the distance between the upper edge of the flanges and the overlying shelf. When a cheese is too low it can easily escape. When a cheese is too high it does not fit between the flange and the overlying shelf. Furthermore, upon submersion, the submersion rack is to be lowered in a straight and accurate manner and liquid flows urging the floating cheeses outwards are to be avoided, all this to prevent the cheeses, floating against the overlying shelf with a limited normal force, from floating from the rack.

From US 5 195 426, a submersion rack is known with a number of compartments consisting of shelves interconnected by extendable or collapsible linkages, so that the mutual distance between the shelves can be varied. In use, blocks of cheese can be introduced into a compartment while a hoisting apparatus keeps this in extended condition, the linkages being extended or folded out so that the shelves are at a distance from each other such that openings between the shelves are sufficiently great for allowing cheeses to pass. Thereupon, the compartment is submerged into the liquid and the linkages slide in or fold in when the underside of the rack has reached the bottom of the basin, while the height of the passageways via which the cheeses have been loaded is reduced to the original size. The cheese then remains afloat against the underside of the shelf due to the buoyant force exerted by the brine. In order to prevent the cheese from floating from the rack the shelves are provided, on one of the end faces, with a downwardly extending edge.

A drawback of this known submersion rack is that the distance between the shelves only becomes smaller when, during submersion, the underside of the rack has reached the bottom of the basin. In particular the cheeses on the lower shelves are not reliably retained in the rack during submersion. Another drawback of this known submersion rack is that the construction is complicated. In particular the sliding and collapsing or folding linkages between the shelves are complex, since, in folded-in condition, they need to create a strong link between the racks but still have to be sufficiently moveable for creating sufficient space between the racks when cheeses are introduced therein or taken out.

### SUMMARY OF THE INVENTION

An object of the intention is to provide a solution with which the passage opening between the shelves for loading and unloading cheeses to be submerged can be temporarily enlarged and which can be realised with a simple construction.

According to the invention, this object is achieved by providing a submersion rack according to claim 1.

As at least some of the parts of the shelves located in the recesses in the panels fit into these recesses with some clearance, by vertically displacing at least the part of the shelf adjoining the opening through which the cheeses are loaded and unloaded, sufficient height for passage between the shelves for loading and unloading the cheeses is provided, while, during submersion, the cheeses are held reliably confined between the shelves, because then, they are in a position of rest of. Moreover, the movability of the shelves is achieved in a manner which, constructively, can be obtained in a very simple manner.

For loading and unloading the cheeses, the vertical displacement of the shelves suspended with clearance, or at least their edge parts, can be any vertical displacement by a sufficiently great vertical component for allowing the cheeses through, for instance a displacement straight upwards or downwards or a displacement at an inclination (i.e. at an inclination with the vertical) or upwards or downwards in a tilting manner.

Preferably, the submersion rack is then designed such that the movable shelves can be moved each separately with respect to the other shelves, so that the number of products to be submerged per measure of capacity is increased since not for all compartments simultaneously, sufficient space needs to be provided for introducing the cheeses into or taking them from the rack. By loading and unloading the cheese per shelf and by only temporarily enlarging the respective passageway to the respective intermediate space, each time only the passageway - and hence the mutual vertical distance - between two shelves needs to be temporarily enlarged.

The invention also provides a submersion apparatus according to claim 13 with such a submersion rack.

Further, due to the simple, movable suspension of the shelves in recesses in the panels, a submersion rack according to the invention is particularly suitable to be delivered in disassembled form. This offers the advantage that during transport, the volume of the submersion rack can be considerably smaller than the volume of a conventional submersion rack. Therefore, according to a further aspect of the invention, a construction kit according to claim 14 is provided for assembling a brine rack according to the invention.

Specific examples of embodiments of the invention have been laid down in the claims. Further details, effects and examples of the invention are discussed in the following with reference to examples represented in the drawing.

### BRIEF DESCRIPTION OF THE FIGURES

Figure 1 shows, in perspective view, an example of a submersion rack according to the invention;
Figure 2 shows a detailed side view of an edge of a shelf of the submersion rack according to Figure 1;
Figure 3 shows, in perspective view, and end panel of the submersion rack according to Figure 1;
Figure 4 shows a top plan view of the shelf of the submersion rack according to Figure 1;
Figure 5 shows a side view of the submersion rack according to Figure 1 in use; and
Figure 6 schematically shows a perspective view of an example of the submersion apparatus with an example of the submersion rack according to the invention.

### DETAILED DESCRIPTION

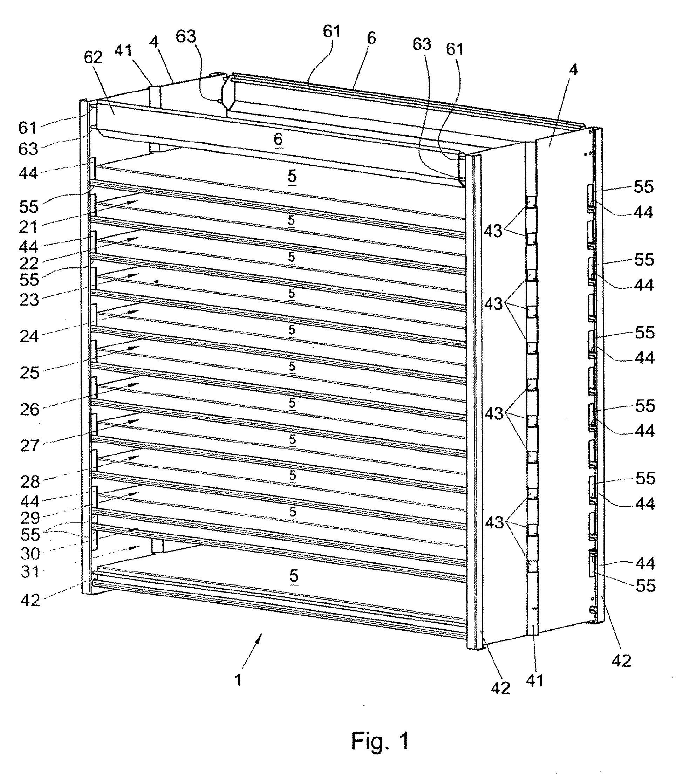

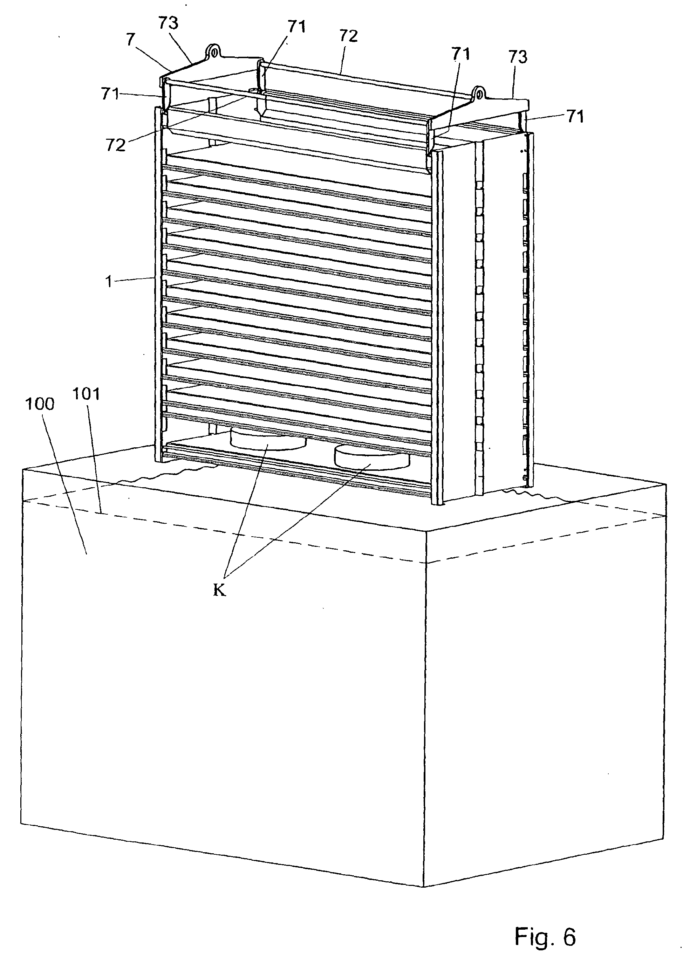

The example shown in Figure 1 of a submersion rack 1 for brining cheeses is used in the manufacture of cheese for submerging the cheese in a bath 100 (Figure 6). The bath 100 and the submersion rack 1 then form part of a submersion apparatus, which, in brining, is called a brining apparatus. Figure 6 shows the submersion bath 100 in a condition filled with brine to a liquid level 101. By means of a hoisting device, the submersion rack can be lowered into the bath and hoisted from the bath. In the lowest compartment of the submersion rack 1, cheeses K are present which can be introduced into the brine bath by lowering the rack.

Cheeses are typically introduced into the brine bath 100 in a mechanical manner with the aid of a conveyor belt on which the cheese is situated entirely or partly below the liquid level and, with the aid of a transfer mechanism, introduced into a compartment of the submersion rack which is at the liquid surface, whereupon the respective shelf is lowered deeper into the brine bath and a following shelf, located above the thus filled shelf, can be filled. It is also possible to fill the shelves by hand while the submersion rack is entirely or partly outside the brine bath.

The example shown in Figure 1 of a submersion rack 1 according to the invention has a number of compartments 21 - 31 for receiving cheeses to be submerged. The compartments 21 - 31 each have a shelf 5. According to his example, the shelves 5 are manufactured from perforated plate material. Other designs of shelves such as grids or racks are also possible.

On two opposite extremities of the shelves 5, in the example the end faces of the plates, panels 4 are erected, bounding the shelves 21 - 31 at these extremities. At the longitudinal sides of the rack 1, between the panels 4, the compartments 21 - 31 are open. Both at the top side and the bottom side, the submersion rack 1 is closed off by one of shelves 5. Via the open sides of the compartments 21- 31, the cheeses can be introduced into the compartments 21 - 31 or be taken from the compartment. As the panels 4 are located at the end faces of the shelves 5, the passageways for loading and unloading the shelves 21-31 have a great length. Thus, many cheeses can be introduced into the compartments 21 - 31 or unloaded therefrom simultaneously.

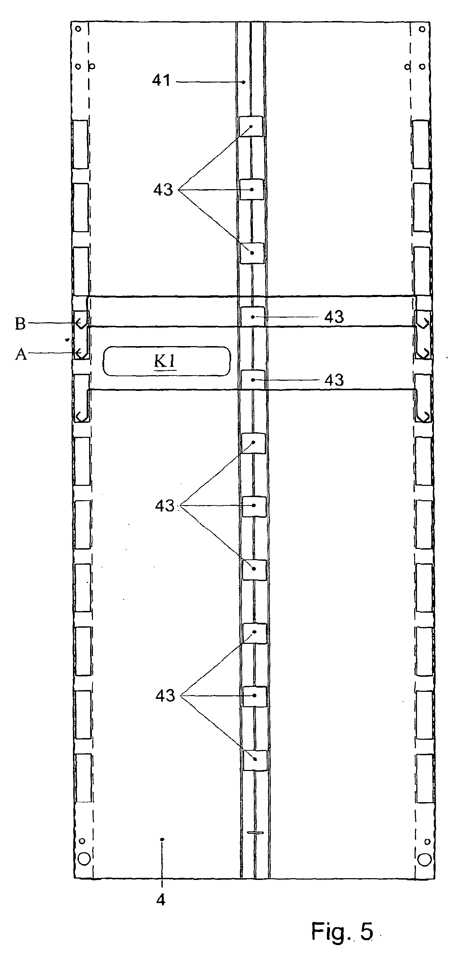

According to this example, the shelves 5 are movable relative to each other so that, when introducing or taking out the cheeses, the shelf 5, bounding the respective compartment 21 - 31 at the top side, can be moved upwards for temporarily enlarging the passageway to the compartment 21 - 31 as shown, for instance, in Figure 1 with compartment 31 and indicated in Figure 5 with positions A and B. In the example shown, the shelves 5 can be moved relative to each other in a simple manner, as the shelves 5 can be moved relative to the panels 4. To this end, the end parts of the shelves 5 are received with clearance in the recesses 44 in the panels 4. It is noted that it is also possible to obtain the temporary enlargement of the passageways for loading and unloading by moving the shelf below the compartment in a downward direction. To this end, the shelf can be suspended in, for instance, a resilient manner while pushing downwards takes place against a spring force.

The shelves can also be moveable relative to each other in a different manner. For instance, it is possible that the shelf has several projections received in a common recess in the respective panel.

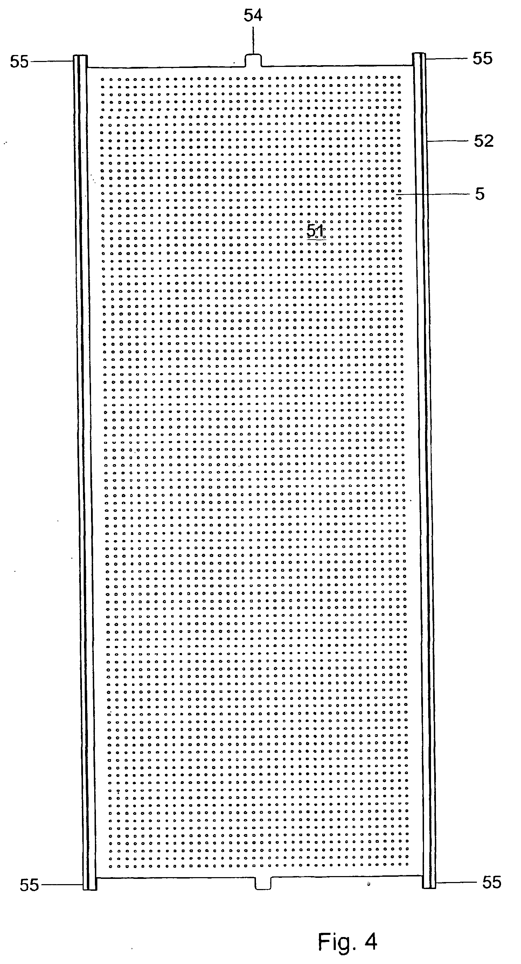

In a condition submerged in a brine bath, the shelves 5 function as downholders for holding the cheeses submerged and for preventing the cheeses from floating upwards. The fact is that cheese can have a specific weight which is lower than that of the liquid in which the cheese is submerged, for instance brine or the like. As a result, upon submersion, the cheese can float as illustrated by a cheese K1 in Figure 5. By floating upwards, the cheese ends up at the upper side of the compartment 21- 31 against the bottom side of the respective shelf 5. Due to, for instance, a horizontal flow in the brine or by floating upwards in an erratic manner, the cheeses could flow from the compartment. In order to prevent this, according to the example shown, the shelves 5 are provided at the open sides, in this example the longitudinal sides, with a downward directed flange or joist 52, so that the cheeses, when submerged in the brine, cannot, at least not easily, escape from the compartment (depending on the dimensions of the cheeses and the height of the downward directed flange 52). Hence, the joist 52 functions, as do the panels 4, as a stop for limiting the freedom of movement of the cheeses in horizontal direction. Moreover, the joist 52 functions as a reinforcement and stiffening of the shelf 5, so that the shelf 5 can be manufactured from a thin plate material. As shown in Figure 4, the shelf has a contact surface 51 which contacts the cheeses upon submersion. According to this example, the contact surface 51 is provided with perforations, so that at the top side of the cheese, a good contact with the brine in the rack is obtained.

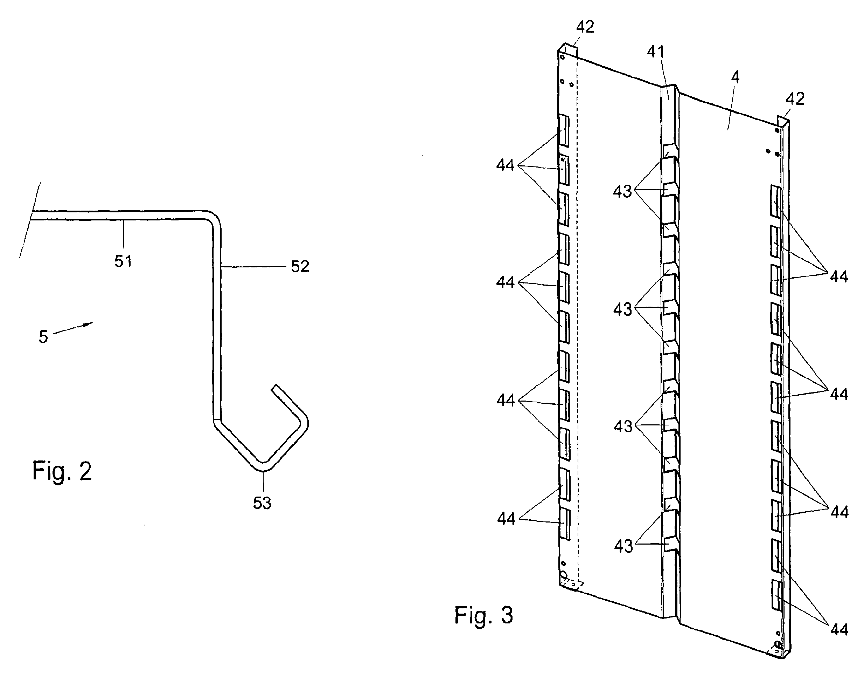

According to the example shown, the joist 52 has a free edge designed as a U-shaped profile which is at an angle, in the example an angle of 45°, to the joist 52, as is shown in more detail in Figure 2. Thus, in a simple and inexpensive manner, a reinforced free edge is obtained on which provisions can engage, such as, for example, a hoisting hook with which the shelf 5 can be lifted for loading or unloading cheeses therebelow. Further, the U-shaped profile 53 gives extra strength and rigidity to the downward projecting joist 52 and, therefore, to the shelf 5 as a whole too. Other sections than the U-shaped profile are also possible, such as, for example, a V-shape or semicircle. In the example, from the joist 52, only the U-shaped profile extends as far as into the recess 44, so that the larger part of the height of the downward edge is also available as clearance.

According to the example shown, the shelves are manufactured from non-corrosive steel plate material, so that in a particularly inexpensive and simple manner shelves 5 with sufficient constructive rigidity are obtained. However, the shelves 5 can also be designed in a different manner and be provided with, for instance, box-shaped reinforcement tubes, preferably with draining openings for draining brine when hoisting the submersion rack from the bath and be designed or not be designed as a composite construction of bearing girders with one or more spanning elements therebetween.

In the submersion rack 1 shown, the projections 54, 55 of the shelves 5 are included, by their end faces, in the recesses 43, 44 in the panels 4, the shelves 5 projecting partly through the recesses 43, 44. The parts 54, 55 of each shelf 5 included in the recesses 43, 44 do not entirely fill the recesses so that the shelf 5 is retained with clearance in a direction parallel to the panel 4.

As projections of the shelves 5 reach in the recesses 43, 44 in the panels, these recesses 43, 44 can be relatively small. Consequently, the recesses 43, 44 weaken the panels 4 only to a limited extent and, due to their small dimensions they can be easily punched out while, moreover, little waste material is obtained.

Furthermore, the stiffeners 52 of the shelves 5 reach into the respective recesses 44, so that, with the compact projections 55, a heavily loadable support from the shelves 5 to the panels 4 is obtained. According to this example, from a constructional and manufacturing point of view all this is realized in a very simple manner in that the stiffener 52 is designed as a joist 52 of the shelf and in that an extension of this joist 52 reaches into the projection 55.

In Figure 3, a panel 4 is shown in more detail. At the upstanding side edges, the panel 4 has beams 42 extending along the upstanding edge. In the example, the beams 42 are designed as L-shaped profiles formed from folded-over edge parts of the panel 4. The panel 4 has recesses 44 at the upstanding side edges (according to this example just outside the L-shaped profiles 42), in which, each time, a projecting end part 53 of one of the downward directed flanges 52 of the shelf 5 can be received. In the example shown, each time, the recesses 44 adjoin or are at least near to the folding line along which the beam profile 42 has been folded over. As a result, the panels are prevented from bending in the area of the force introduction at the location of the recesses 44. The recesses 44 have a height greater than the height of the projection 55, so that, in use, between the shelf 5 and the panel 4 there is clearance in vertical direction. Due to the clearance, the shelf 5 can be moved vertically up and down in the opening, for instance for the purpose of loading or unloading cheeses. The height of the recesses 43 and 44 is then selected such that the free opening between the two shelves 5 in lifted condition is sufficient for introducing the cheese. With the shelves 5 in the bottom position, the cheese is therefore confined between the panels 4 and flanges 52 of the shelves 5.

As shown in Fig. 3, between the L-shaped profiles, the panel 4 can have a rigidifying profile 41 having, in the example shown, a flat V-shaped cross-section, the open side of which, during use, facing the inside of the submersion rack 1. In the example shown, the rigidifying profile 41 is then formed by folding over or pressing the plate-shaped panel 4 in a suitable manner. In use, the rigidifying profiles 41 project from the sides of the panels 4 remote from the shelves 5 and form no projecting or sharp parts on the inside of the submersion rack which might damage the cheeses. The fact is that during brining, the cheese is still soft and therefore vulnerable.

As indicated in Figure 4, the shelves 5 can each have a lip 54 located at an end face between the reinforcing edges 52. The panel 4 can have recesses 43 into which the lip 54 projects and in which recess 43 it fits with clearance in vertical direction. The clearance is such that the lip 54 bears on the lower edge of the recess 43 when the respective shelf has not been submerged, so that bending of the shelf 5 can be prevented. According to the example shown, the recesses 43 for receiving the lips 54 lie entirely in the rigidifying profile 41, so that any sharp edges of the recesses 43 in the panels 4 are, each time, located in a recessed manner relative to the inner surface of the respective panel 4. The risk of damage to the cheeses which are still soft is thereby further reduced.

As is represented in Figure 1, the panels 4 extend beyond the upper shelf 5 and, at the top side between the panels 4, the submersion rack 1 has beams 6. In the example, the panels 4 are held at a fixed distance by pulling rods 61. Optionally, as is the case in the example shown, both at bottom and the topside between the panels, an additional beam 6 can be attached in the middle, thereby increasing the dimensional stability and/or solidity of the submersion rack 1. In the example, the beams 6 are connected to the panels 4 by bolts, nuts and spacers 63. The set ends 62 of the beams 6 are at distances from the panels 4 defined by the spacers 63. The spacers 63 between the beams 6 and the panels 4 form points of engagement for hoisting members via which forces exerted when hoisting can be uniformly transmitted to parts of the construction located at lower positions. The hoisting member can be designed, for instance, as represented in Figure 6. The hoisting element 7 shown in Figure 6 comprises hooks 71 interconnected by rods 72 and hoisting yokes 73 which can be engaged by a hoisting apparatus (not shown). The hooks 71 are suitable for engaging the spacers 63 adjacent the panel 4, as shown in Fig. 6.

A submersion rack as proposed can particularly suitably be transported in the form of a relatively flat construction kit which, up on arrival at its destination, can be assembled. For instance, as in the example show, the panels and the shelves can be designed to be separate from each other while, in situ, the shelves are then disposed in the recesses in the panels. The design according to example shown has the additional advantage that the structure is manufactured from folded plate material and several rods and can be manufactured and assembled without operations such as welding or soldering. The shelves 5 according to the example shown can be nested so that they can be stacked in a very compact manner.

An immersion rack according to the invention can be of any suitable material, for instance corrosion free steel, plastic, aluminum or the like, while repetitive submersion in a brine pitch naturally imposes specific demands with regard to corrosion resistance.

The invention is not limited to the above described examples. After reading the above, it will be clear to be skilled person that within the framework of the invention many different apparent or not apparent variants are possible. The term "comprising" does not exclude one or more other elements than mentioned being present.

## Claims

1. A submersion rack for submerging cheeses in a bath, with at least one compartment (21 - 31) for including cheeses to be submerged, comprising:
horizontal shelves (5) for carrying and retaining the cheeses therebetween, and
vertical panels (4) supporting the shelves (5),
**characterized in that** the panels (4) each have recesses (43, 44) in which at least parts (54, 55) of the shelves (5) are received,
while at least a number of said parts (54, 55) fit in the respective recess (43, 44) with clearance in vertical direction for allowing, each time, vertical displacement of the respective shelf (5) or at least an edge part thereof, relative to at least one shelf (5) located thereabove or therebelow for temporarily providing space between the shelves (5) for introducing cheeses into the submersion rack (1) and removing cheeses from the submersion rack (1).

2. A submersion rack according to claim 1, further comprising, on at least one side of at least one of the shelves (5) at least one downwardly directed edge (52) facing away from the shelves for confining the cheeses in the submersion rack (1) during submersion.

3. A submersion rack according to claim 1 or 2, wherein at least the shelves (5) or the panels (4) are manufactured from plate material.

4. A submersion rack according to any one of the preceding claims, wherein the panels comprise a first end panel (4) at first ends of the shelves (5) and a second end panel (4) at second ends of the shelves (5) located opposite the first ends.

5. A submersion rack according to any one of the preceding claims, wherein at least a number of the shelves (5) each have at least one projection (54, 55) reaching into one of the recesses (43, 44) in one of the panels (4).

6. A submersion rack according to claim 5, wherein at least a number of the shelves (5) each have at least one stiffener (52) extending as far as said at least one recess (44).

7. A submersion rack according to claims 5 and 6, wherein the stiffener (52) is designed as at least one joist (52) and wherein an extension (53) of said joist reaches into said projection (55).

8. A submersion rack according to any one of the preceding claims, wherein at least one of the panels (4) is manufactured from plate material and the at least one panel (4) has a rigidifying profile (41) projecting on a side of the panel remote from the shelf (5) and which profile (41) extends in a direction transverse to the shelves (5).

9. A submersion rack according to claim 8, wherein at least a number of the recesses (43) extend through the rigidifying profile (41).

10. A submersion rack according to any one of the preceding claims, wherein at least one of the panels (4) is provided, at at least two opposite upstanding side edges, with at least one folded-over joist 42, and wherein at least a number of the recesses (43, 44) are located in or adjacent the at least one folded-over joist (42).

11. A submersion rack according to any one of the preceding claims, wherein the panels (4) are interconnected via at least one rod (6) and/or a spacer (63).

12. A submersion rack according to claim 11, wherein the at least one rod (6) and/or spacer (63) can be used as point of engagement by a hoisting element (71).

13. A submersion device comprising a basin (100) for receiving a submersion liquid (100), a submersion rack (1) according to one or more of the preceding claims and provisions for submerging the submersion rack (1) in the basin (100).

14. A construction kit for assembling a submersion rack (1) for submerging cheeses in a bath (100), with at least one compartment (21-31) for including cheeses to be submerged, comprising:
in a condition of use, horizontal shelves (5) for supporting and retaining the cheeses therebetween, and
in a condition of use, vertical panels (4) for supporting the shelves (5),
**characterized in that** the panels (4) each have recesses (43, 44) for, in a condition of use, receiving parts (54, 55) of the shelves (5) extending therethrough, while, in a condition of use at least a number of said parts (54, 55) fit, with clearance in vertical direction, in one of said recesses (43, 44) for allowing, in use, vertical displacement of the respective shelf (5) relative to at least one shelf (5) located thereabove or therebelow, for providing space between the shelves (5) for placing cheeses into the submersion rack (1) and taking cheeses from the submersion rack (1).

## Patentansprüche

1. Untertauch-Gestell zum Untertauchen von Käse in einem Bad, mit mindestens einem Fach (21-31) zum Aufnehmen von unterzutauchendem Käse, mit:
horizontalen Brettern (5) zum Tragen und Halten des Käses zwischen den Brettern, und
vertikalen Platten (4) zum Halten der Bretter (5),
**dadurch gekennzeichnet, dass**
die Platten (4) jeweils Ausnehmungen (43,44) aufweisen, in denen zumindest Teile (54,55) der Bretter (5) aufgenommen sind,
während zumindest eine Anzahl der Teile (54,55) in die jeweilige, Ausnehmung (43,44) passen, wobei ein Spiel in vertikaler Richtung verbleibt, das jedes Mal eine vertikale Verschiebung des jeweiligen Bretts (5) oder zumindest eines Randteil des Bretts relativ zu mindestens einem darüber oder darunter angeordneten Brett (5) zum temporären Bieten von Platz zwischen den Brettern (5) zum Platzieren von Käse in das Untertauch-Gestell (1) und Entnehmen von Käse aus dem Untertauch-Gestell (5) ermöglicht.

2. Untertauch-Gestell nach Anspruch 1, femer mit mindestens einem nach unten gerichteten Rand (52) auf mindestens einer Seite mindestens eines Bretts (5), der den Brettern abgewandt ist, um den Käse beim Untertauchen in dem Untertauch-Gestell (1) einzugrenzen.

3. Untertauch-Gestell nach Anspruch 1 oder 2, bei dem zumindest die Bretter (5) oder die Platten (4) aus Plattenmaterial gefertigt sind.

4. Untertauch-Gestell nach einem der vorhergehenden Ansprüche, bei dem die Bretter eine erste Endplatte (4) an ersten Enden der Bretter (5) und eine zweite Endplatte (4) an zweiten Enden der Bretter (5) gegenüber den ersten Enden aufweisen.

5. Untertauch-Gestell nach einem der vorhergehenden Ansprüche, bei dem zumindest eine Anzahl von Brettern (5) jeweils mindestens einen Vorsprung (54,55) aufweist, der in eine der Ausnehmungen (43,44) in einer der Platten (4) ragt.

6. Untertauch-Gestell nach Anspruch 5, bei dem zumindest eine Anzahl von Brettern (5) jeweils mindestens ein Versteifungsteil (52) aufweist, das bis zu der mindestens einen Ausnehmung (44) verläuft.

7. Untertauch-Gestell nach Anspruch 5 und 6, bei dem das versteifungsteil (52) als mindestens eine Halterung (52) ausgebildet ist und ein Ansatz (53) der Halterung in den Vorsprung (55) ragt.

8. Untertauch-Gestell nach einem der vorhergehenden Ansprüche, bei dem mindestens eine der Platten (4) aus Plattenmaterial gefertigt ist und die mindestens eine Platte (4) ein Versteifungsprofil (41) aufweist, das auf einer von dem Brett (5) entfernten Seite der Platte vorsteht und in Querrichtung zu den Brettern (5) verläuft.

9. Untertauch-Gestell nach Anspruch 8, bei dem zumindest eine Anzahl der Ausnehmungen (43) durch das Versteifungsprofil (41) verläuft.

10. Untertauch-Gestell nach einem der vorhergehenden Ansprüche, bei dem mindestens eine der Platten (4) zumindest auf zwei einander gegenüberliegenden aufrechten Seitenrändem mit mindestens einer umgeklappten Halterung (42) versehen ist und zumindest eine Anzahl der Ausnehmungen (43,44) in oder benachbart zu der mindestens einen umgeklappten Halterung (42) angeordnet ist.

11. Untertauch-Gestell nach einem der vorhergehenden Ansprüche, bei dem die Platten (4) über mindestens eine Stange (6) und/oder mindestens einen Abstandshalter (63) miteinander verbunden sind.

12. Untertauch-Gestell nach Anspruch 11, bei dem die mindestens eine Stange (6) und/oder der mindestens eine Abstandshalter (63) als Angreifstelle für ein Hubelement (71) verwendet werden kann.

13. Untertauch-Vorrichtung mit einem Behälter (100) zum Aufnehmen einer Eintauchflüssigkeit (100), einem Untertauch-Gestell (1) nach einem oder mehreren der vorhergehenden Ansprüche und Einrichtungen zum Untertauchen des Untertauch-Gestells (1) in dem Becken (100).

14. Bausatz zum Zusammenbauen eines Untertauch-Gestells (1) zum Untertauchen von Käse in einem Bad (100) mit mindestens einem Fach (21-31) zum Aufnehmen von unterzutauchendem Käse, mit:
im Benutzungszustand horizontalen Brettern (5) zum Tragen und Halten von Käse zwischen den Brettern, und
im Benutzungszustand vertikalen Platten (4) zum Halten der Bretter (5),
**dadurch gekennzeichnet, dass**
die Platten (4) jeweils Ausnehmungen (43,44) aufweisen, die im Benutzungszustand durch die Ausnehmungen verlaufende Teile (54,55) der Bretter (5) aufnehmen, während im Benutzungszustand zumindest eine Anzahl der Teil (54,55) mit einem Spiel in vertikaler Richtung in eine der Ausnehmungen (43,44) passt, um bei Benutzung eine vertikale Verschiebung des jeweiligen Bretts (5) relativ zu mindestens einem darüber oder darunter angeordneten Brett (5) zum Bieten von Platz zwischen den Brettern (5) zum Platzieren von Käse in das Untertauch-Gestell (1) und Entnehmen von Käse aus dem Untertauch-Gestell (1) zu ermöglichen.

## Revendications

1. Casier d'immersion pour immerger des fromages dans un bain, avec au moins un compartiment (21 à 31) pour contenir les fromages à immerger, comprenant :
des étagères horizontales (5) pour supporter et retenir les formages entre elles, et
des panneaux verticaux (4) supportant les étagères (5),
**caractérisé en ce que** les panneaux (4) ont chacun des évidements (43, 44) dans lesquels au moins des parties (54, 55) des étagères (5) sont reçues,
alors qu'au moins un certain nombre desdites parties (54, 55) s'adaptent dans l'évidement (43, 44) respectif avec du jeu dans la direction verticale pour permettre, chaque fois, le déplacement vertical de l'étagère (5) respective ou au moins de sa partie de bord, par rapport à au moins une étagère (5) située au dessus ou au dessous pour proposer temporairement de l'espace entre les étagères (5) afin d'introduire des fromages dans le casier d'immersion (1) et de retirer des fromages du casier d'immersion (1).

2. Casier d'immersion selon la revendication 1, comprenant en outre, au moins d'un côté d'au moins l'une des étagère (5), au moins un bord (52) dirigé vers le bas faisant face à distance aux étagères pour confiner les fromages dans le casier d'immersion (1) pendant l'immersion.

3. Casier d'immersion selon la revendication 1 ou 2, dans lequel au moins les étagères (5) ou les panneaux (4) sont fabriqués à partir d'un matériau en tôle.

4. Casier d'immersion selon l'une quelconque des revendications précédentes, dans lequel les panneaux comprennent un premier panneau d'extrémité (4) au niveau des premières extrémités des étagères (5) et un second panneau d'extrémité (4) au niveau des secondes extrémités des étagères (5) situées à l'opposé des premières extrémités.

5. Casier d'immersion selon l'une quelconque des revendications précédentes, dans lequel au moins un certain nombre d'étagères (5) ont chacune au moins une saillie (54, 55) arrivant dans l'un des évidements (43, 44) dans l'un des panneaux (4).

6. Casier d'immersion selon la revendication 5, dans lequel au moins un certain nombre d'étagères (5) ont chacune au moins un raidisseur (52) s'étendant aussi loin que ledit au moins un évidement (44).

7. Casier d'immersion selon les revendications 5 et 6, dans lequel le raidisseur (52) est conçu comme au moins une poutrelle (52) et dans lequel une extension (53) de ladite poutrelle arrive dans ladite saillie (55).

8. Casier d'immersion selon l'une quelconque des revendications précédentes, dans lequel au moins l'un des panneaux (4) est fabriqué à partir d'un matériau en tôle et le au moins un panneau (4) a un profil de raidissement (41) faisant saillie d'un côté du panneau à distance de l'étagère (5) et lequel profil (41) s'étend dans une direction transversale par rapport aux étagères (5).

9. Casier d'immersion selon la revendication 8, dans lequel au moins un certain nombre d'évidements (43) s'étendent à travers le profil de raidissement (41).

10. Casier d'immersion selon l'une quelconque des revendications précédentes, dans lequel au moins l'un des panneaux (4) est prévu, au niveau d'au moins deux bords latéraux verticaux opposés, avec au moins une poutrelle 42 repliée, et dans lequel au moins un certain nombre d'évidements (43, 44) sont situés dans ou de manière adjacente à la au moins une poutrelle (42) repliée.

11. Casier d'immersion selon l'une quelconque des revendications précédentes, dans lequel les panneaux (4) sont interconnectés par au moins une tige (6) et/ou une entretoise (63).

12. Casier d'immersion selon la revendication 11, dans lequel la au moins une tige (6) et/ou l'entretoise (63) peuvent être utilisées en tant que point de mise en prise par un élément de levage (71).

13. Dispositif d'immersion comprenant un bassin (100) pour recevoir un liquide d'immersion (100), un casier d'immersion (1) selon une ou plusieurs des revendications précédentes et des éléments pour immerger le casier d'immersion (1) dans le bassin (100).

14. Ensemble de construction pour assembler un casier d'immersion (1) pour immerger des fromages dans un bain (100), avec au moins un compartiment (21 à 31) pour contenir des fromages à immerger, comprenant :
dans une condition d'utilisation, des étagères horizontales (5) pour supporter et retenir les fromages entre elles, et
dans une condition d'utilisation, des panneaux verticaux (4) pour supporter les étagères (5),
**caractérisé en ce que** les panneaux (4) ont chacun des évidements (43, 44) pour recevoir, dans une condition d'utilisation, des parties (54, 55) des étagères (5) s'étendant à travers ceux-ci alors que dans une condition d'utilisation, au moins un certain nombre desdites parties (54, 55) s'adaptent, avec du jeu dans la direction verticale, dans l'un desdits évidements (43, 44) pour permettre, à l'usage, le déplacement vertical de l'étagère (5) respective par rapport à la au moins une étagère (5) située au dessus ou au dessous, pour proposer de l'espace entre les étagères (5) afin de placer des fromages dans le casier d'immersion (1) et de retirer des fromages du casier d'immersion (1).
